# EUROPÄISCHE PATENTSCHRIFT

(11) **EP 0 621 833 B1**
(45) Veröffentlichungstag und Bekanntmachung des Hinweises auf die Patenterteilung: **10.04.1996**
(21) Anmeldenummer: 93920797.3
(22) Anmeldetag: 22.09.1993
(51) Int. Cl.: B60N 2/04

(54) **KRAFTFAHRZEUGSITZ MIT HÖHEN- UND LÄNGSVERSTELLUNG**
VEHICLE SEAT ADJUSTABLE IN LONGITUDINAL POSITION AND IN HEIGHT
SIEGE D'AUTOMOBILE REGLABLE EN HAUTEUR ET EN LONGUEUR

(30) Priorität: 13.11.1992 DE 4238458
(43) Veröffentlichungstag der Anmeldung: 02.11.1994
(73) Patentinhaber: Bertrand Faure Sitztechnik GmbH & Co. KG, D-31655 Stadthagen (DE)
(72) Erfinder: VILSMEIER, Walter, D-83558 Maithenbeth (DE)
(74) Vertreter: Patentanwälte Dipl.-Ing. Bodo Thielking Dipl.-Ing. Otto Elbertzhagen
(86) Internationale Anmeldenummer: EP9302564
(87) Internationale Veröffentlichungsnummer: WO9411217

(56) Entgegenhaltungen:
- EP-A- 0 445 528
- EP-A- 0 455 086
- FR-A- 2 195 202
- US-A- 2 942 647
- US-A- 3 022 035
- US-A- 3 037 735

## Beschreibung

### TECHNISCHES GEBIET

Die Erfindung betrifft einen Kraftfahrzeugsitz mit Höhen- und Längsverstellung ohne Gleitschienen jedoch mit Lenkern als Verbindung zu karosseriefesten Anlenkpunkten.

### STAND DER TECHNIK

Übliche Längsverstelleinrichtungen von Kraftfahrzeugsitzen bestehen aus Gleitschienen. Solche Gleitschienen haben zahlreiche Nachteile. Sie sind fertigungsintensiv. Die erforderlichen Toleranzen sind schwierig einzuhalten. Längsverstelleinrichtungen für einfache Funktionen an Kraftfahrzeugsitzen ohne Gleitschienen jedoch mit Lenkern als Verbindung zu karosseriefesten Anlenkpunkten sind ebenfalls bekannt, beispielsweise aus US-A-2 942 647.

### DIE ERFINDUNG

Der Erfindung liegt die Aufgabe zugrunde, einen Kraftfahrzeugsitz der als bekannt vorausgesetzten Art zu schaffen, der sowohl eine Höhenverstellung als auch eine Längsverstellung mit einfachen Mitteln zuläßt.

Die Lösung dieser Aufgabe erfolgt mit den Merkmalen des Anspruchs 1.

Bevorzugte Ausführungsformen der Erfindung sind in den Unteransprüchen beschrieben und ergeben sich auch aus der nachfolgenden Zeichnungsbeschreibung.

Die erfindungsgemäße Lösung ist preisgünstig und leichter als bekannte Verstelleinrichtungen.

### KURZBESCHREIBUNG DER ZEICHNUNGSABBILDUNG

Nachstehend wird die Erfindung anhand der Zeichnung im einzelnen beschrieben. Es zeigen:
- Figur 1: eine schematische Anordnung der Vorrichtung in der vorderen Endstellung,
- Figur 2: den Sitz gemäß Figur 1 in der hinteren Endstellung.

### BESTER WEG ZUR AUSFÜHRUNG DER ERFINDUNG

An zwei karosseriefesten Lagerpunkten 5 und 6 sind zwei Hebel 7 und 8 angelenkt. Deren vordere Gelenkpunkte 10 und 11 tragen einen dreiecksförmigen Halter 9. Der dreiecksförmige Halter 9 besitzt drei in den Ecken eines gleichschenkligen oder gleichseitigen Dreiecks angeordnete Gelenkpunkte 10, 22 und 24.

Von den Gelenkpunkten 22 und 24 gehen Kurze Lenker 21 und 23 ab, die ihrerseits über Gelenkpunkte 14 und 20 mit langen Lenkern 13 bzw. 19 verbunden sind. Die oberen Enden der langen Lenker 13 und 19 sind an den Gelenkpunkten 12 und 25 an dem Sitzrahmen 3 angelenkt. Der Sitzrahmen 3 trägt das Sitzpolster 1. An den Sitzrahmen 3 ist der Lehnenträger 4 mit der Rückenlehnenpolsterung 2 angelenkt.

Die langen Lenker 13 und 19 sind mit ihren unteren Gelenkpunkten 15 und 18 aufwärts geführt. Im dargestellten Ausführungsbeispiel erfolgt die angenäherte Parallelführung mittels der Lenker 17 und 16, die am Gelenkpunkt 10 des Halters 9 angelenkt sind.

Es wäre auch denkbar, die Gelenkpunkte 15 und 18 in entsprechenden, ggfs. geradlinigen und parallelen Kurven aufwärts zu führen.

Für die Höhenverstellung sind die ortsfest angelenkten Lenker 7 und 8 maßgebend. Sie übertragen ihre Verschwenkbewegung auf den Halter, der über die daran angeschlossenen Hebel den Sitzrahmen aufwärts oder abwärts mitnimmt.

Die Funktion der Längsverstellung wird deutlich, wenn man sich für diesen Fall den Halter 9 in einer festen vorgegebenen Position vorstellt.

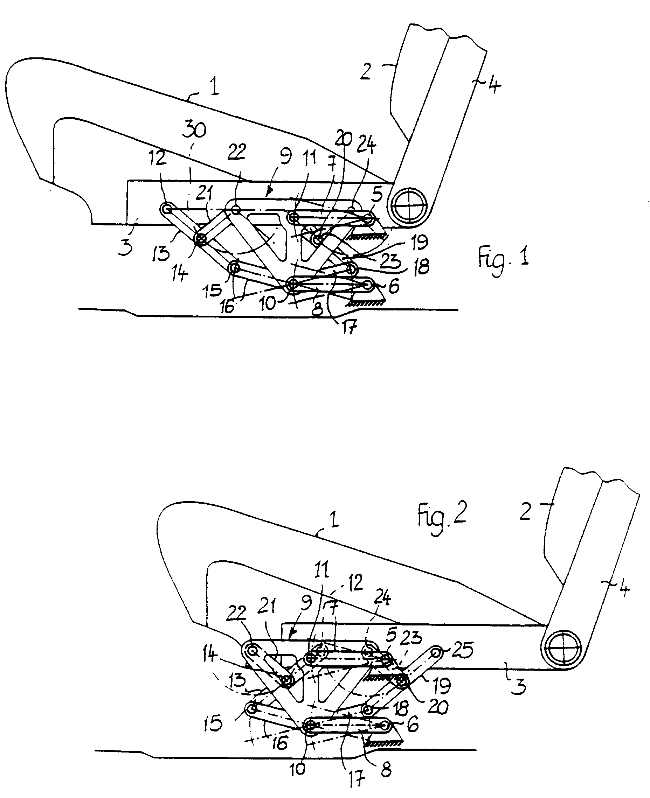

Es verschwenken die kurzen Lenker 21 und 23 über den angedeuteten kreisbogenförmigen Verschwenkweg in die Position gemäß Figur 2. Dabei nehmen sie die langen Lenker 13 und 19 in die in Figur 2 dargestellte Position mit, mit der Folge, daß die Anlenkpunkte 12 und 25 auf einer praktisch geradlinigen Bewegungsbahn 30 bewegt werden. Während des beschriebenen Bewegungsvorgangs verschwenken außerdem die Lenker 16 und 17, welche eine annähernde Parallelführung der Gelenkpunkte 15 und 18 sicherstellen, um deren gemeinsamen Anlenkpunkt 10 an Halter 9.

Eine zusätzliche Neigungsverstellung des Sitzrahmens 3 kann dadurch bewirkt werden, daß man den Abstand zwischen dem Anlenkpunkt 11 und dem Anlenkpunkt 5 veränderbar macht oder den Abstand zwischen den Gelenkpunkten 6 und 10.

Dies könnte beispielsweise durch eine längenveränderliche Ausbildung des Lenkers 7 oder 8 erfolgen.

Eine Verlagerung der Distanz der Anlenkpunkte 11 und 5 bzw. 10 und 6 ist auch dadurch möglich, daß man in den Punkten 10 und/oder 11 eine Kurbelwelle lagert, deren Lagerzapfen an den Punkten 10 und/oder 11 angeordnet ist und deren Hubzapfen das Ende der Lenker 7 bzw. 8 trägt. Ein Verdrehen der Kurbelwelle bzw. Kurbel führt zur Veränderung des Abstandes der Anlenkpunkte 11 und 5 bzw. 10 und 6.

Das in den Zeichnungsfiguren auf der linken Sitzseite dargestellte Hebelgestänge ist in gleicher Ausführung und Anordnung jeweils auf der rechten Sitzseite vorgesehen.

## Patentansprüche

1. Kraftfahrzeugsitz mit Höhen- und Längsverstellung mit Lenkern als Verbindung zu karosseriefesten Anlenkpunkten,
dadurch gekennzeichnet,
daß ein Halter (9) mittels parallel verschwenkbar an karosseriefesten Anlenkpunkten (5; 6) angelenkter Lenker (7; 8) geführt ist, wobei der Halter (9) zwei kurze Lenker (21; 23) trägt, die mit ihren jeweils anderen Enden an zwei weiteren langen Lenkern (13; 19) angelenkt sind, welche ihrerseits mit ihren oberen Enden (12; 25) am Sitzrahmen (3) angelenkt sind und mit ihren unteren Enden (15; 18) aufwärts geführt sind, wobei die kurzen Lenker (21; 23) zwischen den Enden der langen Lenker (13; 19) angelenkt sind.

2. Kraftfahrzeugsitz nach Anspruch 1,
dadurch gekennzeichnet,
daß die kurzen Lenker (21; 23) im Zentrum der langen Lenker (13; 19) angelenkt sind.

3. Kraftfahrzeugsitz nach Anspruch 1 oder 2,
dadurch gekennzeichnet,
daß die aufwärts geführten unteren Enden (15; 18) der langen Lenker mittels von einem gemeinsamen Anlenkpunkt (10) am Halter (9) auseinanderlaufender Lenker (16; 17) aufwärts geführt sind.

4. Kraftfahrzeugsitz nach einem oder mehreren der Ansprüche 1 bis 3,
dadurch gekennzeichnet,
daß der Abstand der Anlenkpunkte (12; 25) der langen Lenker (13; 19) am Sitzrahmen (3) zumindest im wesentlichen dem Abstand der Anlenkpunkte der kurzen Lenker (21; 23) am Halter (9) entspricht.

5. Kraftfahrzeugsitz nach einem oder mehreren der Ansprüche 1 bis 4,
dadurch gekennzeichnet,
daß der Abstand zwischen oberem Anlenkpunkt (12; 25) der langen Lenker (13; 19) und dem Anlenkpunkt (14; 20) der kurzen Lenker (21; 23) gleich ist dem Abstand zwischen den beiden Anlenkstellen (14; 20 und 22; 24) am Halter (9).

6. Kraftfahrzeugsitz nach einem oder mehreren der Ansprüche 1 bis 5,
dadurch gekennzeichnet,
daß die unteren Gelenkpunkte (15; 18) der langen Lenker (13; 19) zumindest annähernd parallel zueinander geführt sind.

## Claims

1. Vehicle seat with height and length adjustment with guide rods as the connection with the attachment points fixed on the bodywork, characterised in that a holder (9) is guided by means of guide rods (7;8) attached for parallel swivel movement to attachment points (5;6) fixed on the bodywork whereby the holder (9) supports two guide rods (21;23) which are each attached at their other end to two further long guide rods (13;19) which in turn are attached by their upper ends (12;25) to the seat frame (3) and are guided by their lower ends (15;18) upwards with the short rods (21;23) being attached between the ends of the long rods (13;19).

2. Vehicle seat according to claim 1 characterised in that the short rods (21;23) are attached in the centre of the long rods (13;19).

3. Vehicle seat according to claim 1 or 2 characterised in that the upwardly guided lower ends (15;18) of the long rods are guided upwards by means of guide rods (16;17) extending away from each other from a common attachment point (10) on the holder (9).

4. Vehicle seat according to one or more of claims 1 to 3 characterised in that the spacing of the attachment points (12;25) of the long rods (13;19) on the seat frame (3) corresponds at least substantially to the spacing of the attachment points of the short rods (21;23) on the holder (9).

5. Vehicle seat according to one or more of claims 1 to 4 characterised in that the spacing between the upper attachment point (12;25) of the long rods (13;19) and the attachment point (14;20) of the short rods (21;23) is equal to the spacing between the two attachment points (14; 20 and 22;24) on the holder (9).

6. Vehicle seat according to one or more of claims 1 to 5 characterised in that the lower articulation points (15;18) of the long rods (13;19) are guided at least substantially parallel to each other.

## Revendications

1. Siège de véhicule automobile réglable en hauteur et en longueur avec guides comme raccordement à des points fixes sur la carrosserie,
caractérisé en ce que
un support (9) est conduit à l'aide de guides (7; 8) montés, articulés et pivotables parallèment, sur des points d'articulation (5; 6) fixes sur la carrosserie, le support (9) portant deux guides courts (21; 23), dont les autres extrémités sont reliées, artiiculées, à deux guides longs (13; 19), qui sont montés, articulés, sur le cadre (3) du siège, par leurs extrémités supérieures (12; 25), tandis qu'ils sont conduits vers le haut par leurs extrémités inférieures (15; 18), les guides les plus courts (21; 23) étant articulés entre les extrémités des guides les plus longs (13; 19).

2. Siège de véhicule automobile selon la revendication 1,
caractérisé en ce que
les guides courts (21; 23) sont articulés au centre des longs guides (13; 19).

3. Siège de vehicule automobile selon la revendication 1 ou 2,
caractérisé en ce que
les extrémités inférieures (15; 18) des longs guides sont conduites vers le haut à l'aide de guides (16; 17) s'écartant l'un de l'autre à partir d'un point d'articulation commun (10) sur le support (9).

4. Siège de véhicule automobile selon l'une ou plusieurs des revendications 1 à 3,
caractérsié en ce que
l'intervalle entre les points d'articulation (12; 25) des longs guides (13; 19), sur le cadre (3) du siège, correspond, pour le moins essentiellement, à l'intervalle séparant les points d'articulation des guides courts (21; 23), sur le support (9).

5. Siège de véhicule automobile selon l'une ou plusieurs des revendications 1 à 4,
caractérisé en ce que
l'intervalle entre le point d'articulation supérieur (12; 25) des longs guides (13; 19) et le point d'articulation (14; 20) des guides courts (21; 23) est égal à l'intervalle entre les deux points d'articulation (14; 20 et 22; 24) sur le support (9).

6. Siège de véhicule automobile selon l'une ou plusieurs des revendications 1 à 5,
caractérisé en ce que
les deux points d'articulation inférieurs (15; 18) des longs guides (13; 19) sont, au moins, approximativement, parallèles l'un par rapport à l'autre.
